# FASCICULE DE BREVET EUROPEEN

(11) **EP 3 685 492 B1**
(45) Date de publication et mention de la délivrance du brevet: **09.02.2022**
(21) Numéro de dépôt: 18765436.3
(22) Date de dépôt: 05.09.2018
(51) Int. Cl.: H02K 1/27, H02K 1/24, H02K 29/03

(54) **ISTHMES DE PONTS MAGNETIQUES D'UN ROTOR DE MACHINE ELECTRIQUE**
ISTHMI FÜR DIE MAGNETISCHEN BRÜCKEN EINES ELEKTRISCHEN MASCHINENROTORS
ISTHMI FOR THE MAGNETIC BRIDGES OF AN ELECTRIC MACHINE ROTOR

(30) Priorité: 18.09.2017 FR 1758620
(43) Date de publication de la demande: 29.07.2020
(73) Titulaire: Mavel EDT S.p.A., 11026 Pont-Saint-Martin (AO) (IT)
(72) Inventeur: FAVRE, Luca, 11010 Valpelline (AO) (IT); BOISSON, Julien, 92500 RUEIL-MALMAISON (FR); GAUSSENS, Benjamin, 78530 BUC (FR); BETTONI, Davide, Settimo Vittone to Italy (IT); DIB, Wissam, 92150 SURESNES (FR); VALIN, Thomas, 92500 RUEIL-MALMAISON (FR); ABDELLI, Abdenour, 78380 BOUGIVAL (FR)
(74) Mandataire: Leoncini, Alberto
(86) Numéro de dépôt international: PCT/EP2018/073804
(87) Numéro de publication internationale: WO 2019/052862

(56) Documents cités:
- EP-A1- 1 566 876
- EP-A2- 2 372 872
- WO-A1-2016/188764
- FR-A1- 2 995 469
- JP-A- 2009 112 181
- US-A1- 2012 274 168

## Description

La présente invention se rapporte à une machine électrique tournante synchrone à réluctance variable ou synchro-réluctante assistée d'aimants permanents et plus particulièrement à un rotor d'une telle machine qui fonctionne avec un bus continu haute tension qui permet une forte puissance.

Généralement, une telle machine électrique comporte un stator et un rotor disposés coaxialement l'un dans l'autre.

Le rotor est formé d'un corps de rotor avec un empilage de tôles placé sur un arbre de rotor. Ces tôles comprennent des logements pour des aimants permanents et des perforations pour créer de barrières de flux permettant de diriger radialement le flux magnétique des aimants vers le stator et de favoriser la création d'un couple réluctant.

Ce rotor est généralement logé à l'intérieur d'un stator qui porte des bobinages électriques permettant de générer un champ magnétique tournant permettant d'entraîner en rotation le rotor.

Comme cela est mieux décrit dans le document WO2016188764, le rotor peut comprendre une pluralité d'évidements axiaux qui traversent les tôles de part en part.

Une première série d'évidements axiaux, disposés radialement les uns au-dessus des autres et à distance les uns des autres, forment des logements pour des générateurs de flux magnétiques, ici des aimants permanents sous forme de barreau rectangulaire.

L'autre série d'évidements consiste en des perforations de direction radiale inclinée, qui partent de ces logements pour arriver au voisinage du bord des tôles.

Les perforations inclinées sont disposées symétriquement par rapport aux logements des aimants de manière à former à chaque fois une figure géométrique sensiblement en forme de V à fond aplati avec le fond plat formé par le logement et avec les bras inclinés de ce V formés par les perforations, Il se crée ainsi des barrières de flux formées par les perforations. Le flux magnétique provenant des aimants ne peut alors que transiter par les parties pleines entre les perforations. Ces parties pleines sont généralement constituées d'un matériau ferromagnétique. L'espace séparant les perforations inclinées des logements des aimants est appelé pont magnétique ou encore isthme magnétique.

Le document WO2016188764 décrit une machine électrique comprenant un rotor et un stator comprenant une paroi opposée au rotor, ledit stator portant une multiplicité d'encoches radiales disposées circonférentiellement le long dudit stator. Les encoches comprennent une paroi de fond à une certaine distance de la paroi du stator de manière à former une multiplicité d'encoches fermées,

Le document EP2372872 décrit une machine qui a un rotor cylindrique multilobé comprenant un ensemble de pôles nord et sud alternés formés d'aimants permanents rectangulaires disposés le long d'une configuration de concentration de flux radiale. Les aimants sont logés dans des évidements respectifs formés dans une masse magnétique du rotor. Le rotor comprend un circuit de défluxage magnétique dont la réluctance magnétique est déterminée sur la base d'une réluctance magnétique interne de chaque aimant de telle sorte que le rapport entre les réluctances magnétiques varie de 0,3 à 3.

Le document DE10253950 décrit des évidements axiaux qui ont une base rectangulaire mais qui sont évasés sur leurs côtés. L'intérêt d'une telle architecture pour ces évidements axiaux est de permettre de diminuer l'épaisseur des ponts magnétiques par rapport à l'état de la technique. Ceci permet d'améliorer le fonctionnement électromagnétique des ponts magnétiques et des barrières de flux. Cependant, un tel évasement engendre un problème technique supplémentaire. En effet, on constate que la tenue mécanique de ces isthmes magnétiques à haute vitesse n'est pas assurée car la contrainte mécanique sur ceux-ci est très importante. Le risque de rupture ou de fissure est réel.

Ceci peut générer en outre des à-coups et des vibrations au niveau du rotor en entraînant un inconfort d'utilisation de cette machine. Une solution consiste à augmenter l'épaisseur des ponts magnétiques afin de pouvoir tenir mécaniquement l'ensemble rotor et aimants, mais cela implique nécessairement une dégradation des performances électromagnétiques avec un risque de court-circuitage d'une partie des aimants permanents.

La présente invention vise ainsi à remédier aux inconvénients énumérés ci-dessus et notamment vise à proposer un rotor dont les ponts magnétiques puissent tenir mécaniquement aux hautes vitesses (jusqu'à 16800 rpm), et ceci sans dégrader les performances électromagnétiques des ponts magnétiques.

Ainsi, pour atteindre au moins les objectifs susvisés, parmi d'autres, la présente invention propose un rotor pour machine électrique, le rotor comprend :
- un corps de rotor, formé par un empilage de tôles, placé sur un arbre de rotor,
- au moins deux pôles magnétiques, chaque pôle magnétique est composé de trois aimants positionnées dans trois évidements axiaux dont un évidement axial externe situé à proximité de la périphérie du rotor, un évidement axial interne situé à proximité du centre du rotor et un évidement axial central situé radialement entre les deux autres évidements,
- une barrière de flux externe, une barrière de flux centrale et une barrière de flux interne, chaque barrière de flux comprend deux évidements inclinés positionnés de part et d'autre des évidements axiaux et séparés de ceux-ci par des ponts magnétiques,
caractérisé en ce que les évidements axiaux comprennent deux congés supérieurs dont le rayon est compris entre 0.3 et 0.6 mm et vaut préférentiellement 0.5 mm et qui s'étendent radialement au-dessus desdits évidements axiaux, à l'opposé de l'arbre du rotor, afin de permettre une diminution de la contrainte mécanique en haut desdits évidements axiaux, l'évidemment axial interne comprend deux congés inférieurs composés chacun d'un premier congé dont le rayon de courbure R1 est compris entre 0.95 et 1.1 mm et vaut préférentiellement 1 mm, et un deuxième congé dont le rayon de courbure R2 est compris entre 2.51 et 2.53 mm et vaut préférentiellement 2.52 mm, les deux congés inférieurs s'étendent radialement en dessous dudit évidemment axial interne, vers l'arbre du rotor.

Selon un mode de réalisation, les évidements axiaux ont une forme sensiblement trapézoïdale.

Selon un mode de réalisation, les évidements axiaux ont une forme sensiblement rectangulaire.

Selon un mode de réalisation, l'épaisseur des ponts magnétiques entre les deux évidements inclinés de la barrière de flux externe et l'évidement axial externe est comprise entre 0.5 mm et 0.6 mm et vaut préférentiellement 0.55 mm.

Selon un mode de réalisation, l'épaisseur des ponts magnétiques entre les deux évidements inclinés de la barrière de flux centrale et l'évidement axial central est comprise entre 0.6 mm et 0.7 mm et vaut préférentiellement 0.65 mm.

Selon un mode de réalisation, l'épaisseur des ponts magnétiques entre les évidements inclinés de la barrière de flux interne et l'évidement axial interne est comprise entre 1 mm et 1.1 mm et vaut préférentiellement 1.05 mm.

Selon un mode de réalisation, les deux évidements inclinés de la barrière de flux interne comprennent une cavité qui a un rayon de courbure R3 compris entre 2.7 et 2.9 mm et qui vaut préférentiellement 2.8 mm.

Selon un mode de réalisation, les évidements inclinés forment entre eux un angle d'ouverture (θ1, θ2, θ3) qui correspond à l'angle entre deux droites (Δ1, Δ2) passant chacune par le centre C du rotor et par un point milieu (M) positionné au niveau d'une face externe des évidements respectifs de chaque barrière de flux et en ce que le rotor comprend quatre pôles magnétiques primaires composés chacun d'une barrière de flux externe comprenant un angle d'ouverture (θ1) sensiblement égal à 43,1°, d'une barrière de flux centrale comprenant un angle d'ouverture (θ2) sensiblement égal à 33,1° et une barrière de flux interne comprenant un angle d'ouverture (θ3) sensiblement égal à 23,1° et quatre pôles magnétiques secondaires composés chacun d'une barrière de flux externe comprenant un angle d'ouverture (θ1) sensiblement égal à 34,4°, d'une barrière de flux centrale comprenant un angle d'ouverture (θ2) sensiblement égal à 24,4 ° et une barrière de flux interne comprenant un angle d'ouverture (θ3) sensiblement égal à 14,4° et chaque pôle secondaire est alterné avec un pôle primaire.

Selon un mode de réalisation du rotor, la différence entre les angles d'ouvertures (θ1, θ2, θ3) de chaque barrière de flux respective d'un pôle magnétique à l'autre est égale à 8,7°.

Selon un deuxième aspect, l'invention concerne une machine électrique qui comprend un stator et un rotor tel que décrit précédemment et où le rotor est logé à l'intérieur du stator.

Selon un mode de réalisation, ledit stator comprend une multiplicité d'encoches radiales disposées circonférentiellement le long dudit stator.

Selon un mode de réalisation, les encoches s'étendent axialement le long du stator.

Selon un mode de réalisation, le stator a un diamètre extérieur compris entre 100 et 300 mm et vaut de préférence 200 mm et un diamètre intérieur compris entre 100 et 200 mm qui vaut de préférence 135 mm.

Selon un mode de réalisation de la machine électrique, elle comprend un entrefer dont la longueur est comprise entre 0.4 mm et 0.8 mm et qui vaut de préférence 0.6 mm.

D'autres caractéristiques et avantages du dispositif selon l'invention, apparaîtront à la lecture de la description ci-après d'un exemple non limitatif de réalisation, en se référant aux figures annexées et décrites ci-après.

### Présentation succincte des figures

La figure 1 illustre un rotor conforme à l'invention ;
La figure 2 illustre également un rotor conforme à l'invention ;
La figure 3 illustre une machine électrique conforme à l'invention ;
La figure 4 représente les contraintes mécaniques subies par un pont magnétique.

### Description détaillée de l'invention

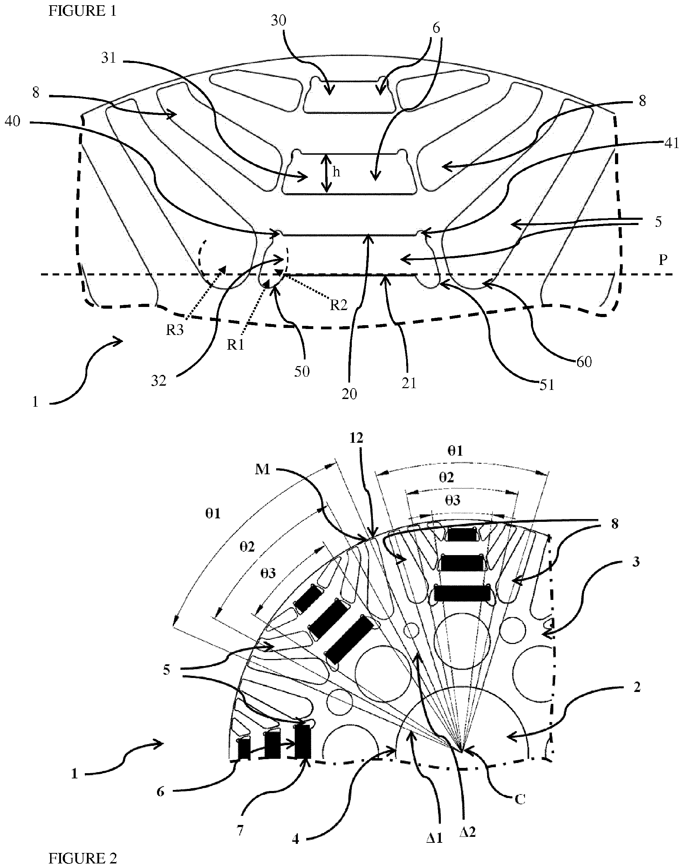

Comme illustré sur les figures 1 et 2, un rotor 1 comporte de manière connue en soi, un arbre 2, de préférence magnétique, sur lequel est placé un empilage de tôles 3. Celles-ci peuvent être ferromagnétiques planes, identiques et laminées. Elles sont assemblées les unes aux autres par tous moyens connus. Les tôles 3 sont de forme circulaire et comprennent un alésage central 4 traversé par l'arbre 2 de rotor et une pluralité d'évidements axiaux 5 qui traversent les tôles 3 de part en part.

Une première série d'évidements axiaux 6 sont disposés radialement les uns au-dessus des autres et à distance les uns des autres. Ils forment des logements pour des générateurs de flux magnétiques, ici des aimants permanents 7 sous forme de barreaux rectangulaires. Les évidements axiaux 6 comprennent une surface supérieure 20 et une surface inférieure 21 et ces deux surfaces (20, 21) sont sensiblement parallèles. Les surfaces supérieures 20 et inférieures 21 sont fermées par des côtés. Ces côtés, dans le cadre de l'invention, sont évasés. Cela signifie qu'ils sont sensiblement plus éloignées de l'aimant permanents 7 au niveau de la surface inférieure 21 et qu'ils sont sensiblement plus proche de l'aimant permanents 7 au niveau de la surface supérieure 20 de telle manière que les évidements axiaux 6 ont la forme d'une pyramide de hauteur h dont le sommet est écrêté (en d'autres termes, les évidements axiaux 6 ont sensiblement une forme de trapèze). Cette forme ainsi obtenue permet d'améliorer les performances électromagnétiques du rotor 1.

Les évidements axiaux 6 sont au nombre de trois et composent ainsi, avec les aimants permanents 7, une partie d'un pôle magnétique.

Dans le cadre de l'invention, le rotor 1 comprend un évidement axial externe 30 situé à proximité de la périphérie du rotor, un évidement axial central 31 situé entre les deux autres évidements et un évidemment axial interne 32 situé à proximité du centre du rotor.

Selon l'invention, les trois évidements axiaux (30, 31, 32) comprennent deux congés supérieurs (40, 41) en forme de demi sphère et qui ont un rayon compris entre 0.3 et 0.6 mm et qui est préférentiellement de 0.5 mm. Ces congés supérieurs (40, 41) s'étendent à partir de la surface supérieure 20 et au-dessus de celle-ci afin de permettre une répartition de la contrainte mécanique en haut desdits évidements axiaux (30, 31, 32).

Selon l'invention, l'évidemment axial interne 32 comprend en plus deux congés inférieurs (50, 51). Ces congés inférieurs (50, 51) s'étendent à partir de la surface inférieure 21 et en-dessous de celle-ci afin de permettre une répartition de la contrainte mécanique en bas de l'évidement axial interne 32. En augmentant la répartition de la contrainte mécanique sur une plus grande distance cela permet de diminuer la contrainte mécanique. Ces congés (50, 51) sont composés chacun de deux congés sous-jacents dont un premier congé qui a un rayon de courbure R1 compris entre 0.9 et 1.1 mm, et qui vaut préférentiellement 1 mm, et un deuxième congé qui a un rayon de courbure R2 compris entre 2.51 et 2.53 mm, et qui vaut préférentiellement 2.52 mm.

L'autre série d'évidements consiste en des perforations de direction radiale inclinée 8, qui partent des évidements axiaux 6 pour arriver au voisinage du bord des tôles 3 et qui vont jouer le rôle de barrière de flux.

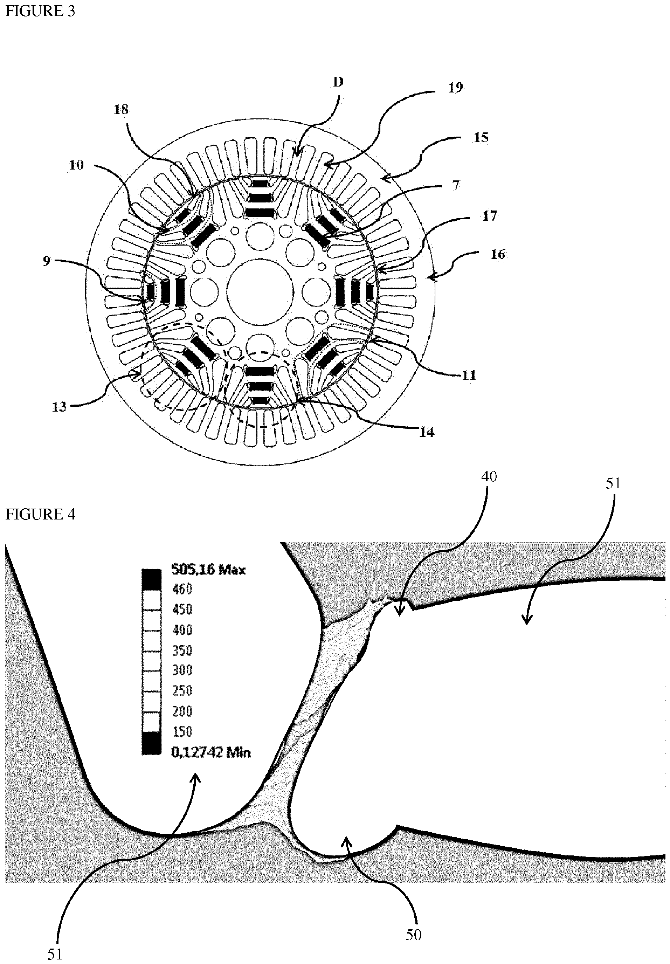

Comme visible sur la figure 3, le rotor 1 comprend huit pôles magnétiques. Chaque pôle magnétique est composé de trois aimants permanents 7 positionnés dans les trois évidements axiaux 6 prévus pour loger les aimants permanents 7. Le rotor 1 est également composé de trois barrières de flux dont une barrière de flux externe 9, une barrière de flux centrale 10 et une barrière de flux interne 11.

Tel que cela est visible sur les figures 1 à 3, chaque barrière de flux (9, 10, 11) comprend deux perforations inclinées qui sont disposées symétriquement par rapport aux logements des aimants 7 pour chaque pôle magnétique. Ainsi, il se forme à chaque fois une figure géométrique sensiblement en forme de V à fond aplati avec le fond plat formé par le logement 7 et avec les bras inclinés de ce V formés par les perforations inclinées.

Comme cela a été évoqué précédemment, les interstices entre les évidements axiaux (30, 31, 32) et les perforations inclinées constituent les ponts magnétiques. L'épaisseur des ponts magnétiques entre les deux évidements inclinés 8 de la barrière de flux externe 9 et l'évidement axial externe 30 est comprise entre 0.5 mm et 0.6 mm, et vaut préférentiellement 0.55 mm. L'épaisseur des ponts magnétiques entre les deux évidements inclinés 8 de la barrière de flux centrale 10 et l'évidement axial central 31 est comprise entre 0.6 mm et 0.7 mm et vaut préférentiellement 0.65 mm.

L'épaisseur des ponts magnétiques entre les évidements inclinés 8 de la barrière de flux interne 11 et l'évidement axial interne 32 est comprise entre 1 mm et 1.1 mm et vaut préférentiellement 1.05 mm.

Les deux évidements inclinés 8 de la barrière de flux interne 11 ont une extrémité inférieure qui se prolonge en dessous d'un plan P formé par la surface inférieure 21 de l'évidement axial intérieur 32 de manière à former une cavité 60 qui soit en dessous du plan P formé par la surface inférieure 21 et vis-à-vis des congés inférieurs (50, 51). Ces cavités 60 peuvent avoir un rayon de courbure R3 compris entre 2.7 et 2.9 mm et préférentiellement 2.8 mm.

Pour chaque barrière de flux (9, 10, 11) de chaque pôle magnétique va correspondre un angle d'ouverture (θ1, θ2, θ3) qui va qualifier l'ouverture de la forme en V. Ces angles d'ouverture correspondent à l'angle entre deux droites (Δ1, Δ2) passant chacune par un centre C du rotor 1 et par un point milieu M positionné au niveau d'une face externe 12 des perforations de direction radiale inclinée 8 de chaque barrière de flux.

Comme visible aux figures 2 et 3, le rotor 1 comprend deux architectures de pôles magnétiques. A cet effet, il comprend quatre pôles magnétiques primaires 13 et quatre pôles magnétiques secondaires 14.

Les pôles magnétiques primaires 13 sont composés chacun d'une barrière de flux externe 9 qui comprend un angle d'ouverture θ1 sensiblement égal à 43,1°, d'une barrière de flux centrale 10 comprenant un angle d'ouverture θ2 sensiblement égal à 33,1° et une barrière de flux interne 11 comprenant un angle d'ouverture θ3 égal à 23,1°. Les quatre pôles magnétiques secondaires 14 sont composés quant à eux chacun d'une barrière de flux externe 9 comprenant un angle d'ouverture θ1 sensiblement égal à 34,4°, d'une barrière de flux centrale 10 comprenant un angle d'ouverture θ2 sensiblement égal à 24,4° et une barrière de flux interne 11 comprenant un angle d'ouverture θ3 sensiblement égal à 14,4°.

Le rotor 1 comprend une alternance entre les pôles magnétiques primaires 13 et les pôles magnétiques secondaires 14. De cette manière l'ondulation du couple, les harmoniques de force contre-électromotrice et le bruit acoustique sont fortement réduits par rapport au machine électrique de l'art antérieur. Dans le mode de réalisation de la machine électrique, la différence entre les angles d'ouvertures pour chaque barrière de flux spécifique est constante pour chaque paire de pôles primaire et secondaire alternée. Cette différence angulaire est sensiblement égale à 8,7°. Cette différence angulaire de 8,7 ° se retrouve pour les barrières de flux externe, centrale et interne pour chaque pôle primaire et secondaire qui se suivent.

Dans le mode de réalisation décrit, le rotor 1 peut a une longueur de 150 mm et les tôles 3 constitutives du rotor 1 sont laminées à 0.35 mm.

En référence à la figure 3, qui illustre une machine électrique tournante conforme à l'invention (ici une machine synchrone à réluctance variable assistée d'aimant permanent), une machine électrique comprend un stator 15 imbriqué dans le rotor 1 de manière coaxiale.

Le stator 15 comprend une bague annulaire 16 avec une paroi interne 17 dont le diamètre intérieur est prévu pour recevoir le rotor 1 avec un espace nécessaire pour réaliser un entrefer 18. Cette bague comprend une multiplicité de perçages, ici de section oblongue, qui forment des encoches 19 pour les bobinages d'induit.

Plus précisément, ces perçages s'étendent axialement tout au long du stator en étant disposés radialement sur la bague tout en étant placés circonférentiellement à distance les uns des autres d'une distance D. Dans le cadre du mode de réalisation illustré, il y a 48 perçages.

Dans le cadre du mode de réalisation illustré, le stator a un diamètre extérieur de 200 mm et un diamètre intérieur de 135 mm. La longueur de l'entrefer 18 de la machine électrique est de 0.6 mm.

La figure 4 représente les contraintes mécaniques subies par le pont magnétique entre les évidements inclinés 8 de la barrière de flux interne 11 et un évidement axial interne 32. On peut visualiser que, grâce à l'ajout de congés inférieurs (50, 51), supérieurs (40, 41) et des cavités 60 les contraintes mécaniques subies aux hautes vitesses sont mieux réparties, comme l'indique les différents niveaux de gris qui sont relativement uniformes, entre les deux évidements ce qui augmente la tenue mécanique de l'ensemble sans pour autant dégrader les performances électromagnétiques.

Comme il va de soi, l'invention ne se limite pas à la forme de réalisation des ouvertures, décrite ci-dessus à titre d'exemple, elle embrasse au contraire toutes les variantes de réalisation comme défini par les revendications annexées.

## Revendications

1. Rotor (1) pour machine électrique, le rotor (1) comprend :
- un corps de rotor (1), formé par un empilage de tôles (3), placé sur un arbre de rotor (1),
- au moins deux pôles magnétiques, chaque pôle magnétique est composé de trois aimants (7) positionnés dans trois évidements axiaux (6), dont un évidement axial externe (30) situé à proximité de la périphérie du rotor (1), un évidemment axial interne (32) situé à proximité du centre du rotor (1) et un évidement axial central (31) situé radialement entre les deux autres évidements (30, 32),
- une barrière de flux externe (9), une barrière de flux centrale (10) et une barrière de flux interne (11), chaque barrière de flux (9, 10, 11) comprend deux évidements inclinés (8) positionnés de part et d'autre des évidements axiaux (6) et séparés de ceux-ci par des ponts magnétiques,
**caractérisé en ce que** les évidements axiaux (6) comprennent deux congés supérieurs (40, 41) dont le rayon est compris entre 0.3 et 0.6 mm et vaut préférentiellement 0.5 mm et qui s'étendent radialement au-dessus desdits évidements axiaux (6), à l'opposé de l'arbre du rotor afin de permettre une diminution de la contrainte mécanique en haut desdits évidements axiaux (6), l'évidemment axial interne (32) comprend deux congés inférieurs (50, 51) composés chacun d'un premier congé dont le rayon de courbure R1 est compris entre 0.95 et 1.1 mm et vaut préférentiellement 1 mm, et un deuxième congé dont le rayon de courbure R2 est compris entre 2.51 et 2.53 mm et vaut préférentiellement 2.52 mm, les deux congés inférieurs (50, 51) s'étendent radialement en dessous dudit évidemment axial interne (32), vers l'arbre du rotor (1).

2. Rotor (1) pour machine électrique selon la revendication précédente **caractérisé en ce que** les évidements axiaux (6) ont une forme sensiblement trapézoïdale.

3. Rotor (1) pour machine électrique selon la revendication 1 **caractérisé en ce que** les évidements axiaux (6) ont une forme sensiblement rectangulaire.

4. Rotor (1) pour machine électrique selon l'une des revendications précédentes **caractérisé en ce que** l'épaisseur des ponts magnétiques entre les deux évidements inclinés (8) de la barrière de flux externe (9) et l'évidement axial externe (30) est comprise entre 0.5 mm et 0.6 mm et vaut préférentiellement 0.55 mm.

5. Rotor (1) pour machine électrique selon l'une des revendications précédentes **caractérisé en ce que** l'épaisseur des ponts magnétiques entre les deux évidements inclinés (8) de la barrière de flux centrale (10) et l'évidement axial central (31) est comprise entre 0.6 mm et 0.7 mm et vaut préférentiellement 0.65 mm.

6. Rotor (1) pour machine électrique selon l'une des revendications précédentes **caractérisé en ce que** l'épaisseur des ponts magnétiques entre les évidements inclinés (8) de la barrière de flux interne (11) et l'évidement axial interne (32) est comprise entre 1 mm et 1.1 mm et vaut préférentiellement 1.05 mm.

7. Rotor (1) pour machine électrique selon l'une des revendications précédentes **caractérisé en ce que** les deux évidements inclinés (8) de la barrière de flux interne (11) comprennent une cavité (60) qui a un rayon de courbure R3 compris entre 2.7 et 2.9 mm et qui vaut préférentiellement 2.8 mm.

8. Rotor (1) pour machine électrique selon l'une des revendications précédentes **caractérisé en ce que** les évidements inclinés (8) forment entre eux un angle d'ouverture (θ1, θ2, θ3) qui correspond à l'angle entre deux droites (Δ1, Δ2) passant chacune par le centre C du rotor (1) et par un point milieu (M) positionné au niveau d'une face externe (12) des évidements (8) respectifs de chaque barrière de flux (9, 10, 11) et **en ce que** le rotor (1) comprend quatre pôles magnétiques primaires (13) composés chacun d'une barrière de flux externe (9) comprenant un angle d'ouverture (θ1) sensiblement égal à 43,1°, d'une barrière de flux centrale (10) comprenant un angle d'ouverture (θ2) sensiblement égal à 33,1° et une barrière de flux interne (11) comprenant un angle d'ouverture (θ3) sensiblement égal à 23,1° et quatre pôles magnétiques secondaires (14) composés chacun d'une barrière de flux externe (9) comprenant un angle d'ouverture (θ1) sensiblement égal à 34,4°, d'une barrière de flux centrale (10) comprenant un angle d'ouverture (θ2) sensiblement égal à 24,4 ° et une barrière de flux interne (11) comprenant un angle d'ouverture (θ3) sensiblement égal à 14,4° et chaque pôle secondaire (14) est alterné avec un pôle primaire (13).

9. Rotor (1) pour machine électrique selon la revendication précédente **caractérisé en ce que** la différence entre les angles d'ouvertures (θ1, θ2, θ3) de chaque barrière de flux (9, 10, 11) respective d'un pôle magnétique à l'autre est égale à 8,7°.

10. Machine électrique **caractérisé en ce qu'**elle comprend un stator (15) et un rotor (1) selon l'une des revendications 1 à 9, ledit rotor (1) étant logé à l'intérieur dudit stator (15).

11. Machine électrique selon la revendication précédente, **caractérisé en ce que** ledit stator (15) comprend une multiplicité d'encoches (19) radiales disposées circonférentiellement le long dudit stator (15).

12. Machine électrique selon la revendication précédente, **caractérisée en ce que** les encoches (19) s'étendent axialement le long du stator (15).

13. Machine électrique selon l'une des revendications 10 à 12, **caractérisée en ce que** le stator (1.5) a un diamètre extérieur compris entre 100 et 300 mm et vaut de préférence 200 mm et un diamètre intérieur compris entre 100 et 200 mm qui vaut de préférence 135 mm.

14. Machine électrique selon l'une des revendications 10 à 13, **caractérisée en ce qu'**elle comprend un entrefer (18) dont la longueur est comprise entre 0.4 mm et 0.8 mm et qui vaut de préférence 0.6 mm.

## Patentansprüche

1. Rotor (1) für elektrische Maschine, der Rotor (1) enthält:
- einem Rotorkörper (1), gebildet aus einem Blechstapel (3), aufgesetzt auf einer Rotorwelle (1),
- mindestens zwei Magnetpole, wobei jeder Magnetpol aus drei Magneten (7) besteht, die in drei axialen Nuten (6) angeordnet sind, von denen eine äußere axiale Nut (30) in der Nähe des Umfangs des Rotors (1) angeordnet ist, eine innere axiale Nut (32) nahe der Mitte des Rotors (1) und eine zentrale axiale Kerbe (31), die sich radial zwischen den anderen beiden Kerben (30, 32) befindet,
- eine äußere Strömungsbarriere (9), eine zentrale Strömungsbarriere (10) und eine innere Strömungsbarriere (11), wobei jede Strömungsbarriere (9, 10, 11) zwei geneigte Vertiefungen (8) aufweist, die beiderseits der axialen Vertiefungen angeordnet sind (6) und durch Magnetbrücken von ihnen getrennt,
**dadurch gekennzeichnet, dass** die Axialnuten (6) zwei Obergewinde (40, 41) aufweisen, deren Radius zwischen 0,3 und 0,6 mm und vorzugsweise gleich 0,5 mm beträgt und die sich radial oberhalb der Axialnuten (6) gegenüber der Rotorwelle (1) erstrecken, um eine Reduzierung der mechanischen Spannung im oberen Teil der axialen Nuten (6) zu ermöglichen,
dass die innere axiale Aussparung (32) zwei Untergewinde (50, 51) umfasst, die jeweils aus einem ersten Fitting, dessen Krümmungsradius R1 zwischen 0,95 und 1,1 mm beträgt und vorzugsweise gleich 1 mm beträgt, und einem zweiten Fitting, dessen Krümmungsradius R2 zwischen 2,51 und 2,53 mm und vorzugsweise 2,52 mm beträgt, erstrecken sich die beiden unteren Gewinde (50, 51) radial unterhalb der inneren axialen Aussparung (32) zur Rotorwelle (1).

2. Rotor (1) für elektrische Maschine nach dem vorhergehenden Anspruch, **dadurch gekennzeichnet, dass** die axialen Aussparungen (6) eine im Wesentlichen trapezförmige Form aufweisen.

3. Rotor (1) für elektrische Maschine nach Anspruch 1, **dadurch gekennzeichnet, dass** die axialen Aussparungen (6) eine im Wesentlichen rechteckige Form aufweisen.

4. Rotor (1) für eine elektrische Maschine nach einem der vorhergehenden Ansprüche, **dadurch gekennzeichnet, dass** die Dicke der Magnetbrücken zwischen den beiden geneigten Aussparungen (8) der äußeren Strömungsbarriere (9) und der äußeren axialen Aussparung (30) liegt sie zwischen 0,5 mm und 0,6 mm und beträgt vorzugsweise 0,55 mm.

5. Rotor (1) für eine elektrische Maschine nach einem der vorhergehenden Ansprüche, **dadurch gekennzeichnet, dass** die Dicke der Magnetbrücken zwischen den beiden geneigten Vertiefungen (8) der zentralen Strömungssperre (10) und der zentralen axialen Vertiefung (31) liegt sie zwischen 0,6 mm und 0,7 mm und beträgt vorzugsweise 0,65 mm.

6. Rotor (1) für eine elektrische Maschine nach einem der vorhergehenden Ansprüche, **dadurch gekennzeichnet, dass** die Dicke der Magnetbrücken zwischen den geneigten Ausnehmungen (8) der inneren Strömungsbarriere (11) und der inneren axialen Ausnehmung (32) liegt zwischen 1 mm und 1,1 mm und beträgt vorzugsweise 1,05 mm.

7. Rotor (1) für eine elektrische Maschine nach einem der vorhergehenden Ansprüche, **dadurch gekennzeichnet, dass** die beiden geneigten Aussparungen (8) der inneren Strömungsbarriere (11) einen Hohlraum (60) mit einem Krümmungsradius R3 zwischen 2,7 und 2,9 mm aufweisen und vorzugsweise 2,8 mm.

8. Rotor (1) für eine elektrische Maschine nach einem der vorhergehenden Ansprüche, **dadurch gekennzeichnet, dass** die schrägen Ausnehmungen (8) zwischen sich einen Öffnungswinkel (Θ1, Θ2, Θ3) einschließen, der dem Winkel zwischen zwei Geraden (Δ1 , Δ2) jeweils durch die Mitte C des Rotors (1) und durch einen Mittelpunkt (M) verlaufend, der an einer Außenfläche (12) der jeweiligen Aussparungen (8) jeder Strömungsbarriere (9, 10, 11) angeordnet ist, dadurch, dass der Rotor (1) vier primäre Magnetpole (13) umfasst, von denen jeder aus einer äußeren Strömungsbarriere (9) mit einem Öffnungswinkel (Θ1) im Wesentlichen gleich 43,1° besteht, aus einer zentralen Strömungsbarriere (10) mit einer Öffnung Winkel (Θ2) im Wesentlichen gleich 33,1° und einer inneren Strömungsbarriere (11) mit einem Öffnungswinkel (Θ3) im Wesentlichen gleich 23,1° und vier sekundären Magnetpolen (14), die jeweils aus einer äußeren Strömungsbarriere (9) mit einer Öffnung bestehen Winkel (Θ1) im Wesentlichen gleich 34,4°, durch eine zentrale Strömungsbarriere (10) mit einem Öffnungswinkel (Θ2) im Wesentlichen gleich 24,4° und durch eine innere Strömungsbarriere (11) mit einem Öffnungswinkel (Θ3) im Wesentlichen gleich 14,4° und jedem Sekundärpol (14) wechselt mit einem Primärpol (13) ab.

9. Rotor (1) für eine elektrische Maschine nach dem vorhergehenden Anspruch, **dadurch gekennzeichnet, dass** die Differenz der Öffnungswinkel (Θ1, Θ2, Θ3) jeder Flussbarriere (9, 10, 11) jeweils von einem Magnetpol an der andere ist 8,7° gleich.

10. Elektrische Maschine, **dadurch gekennzeichnet, dass** sie einen Stator (15) und einen Rotor (1) nach einem der Ansprüche 1 bis 9 umfasst, wobei der Rotor (1) im Inneren des Stators (15) untergebracht ist.

11. Elektrische Maschine nach dem vorhergehenden Anspruch, **dadurch gekennzeichnet, dass** der Stator (15) mehrere radiale Kerben (19) umfasst, die in Umfangsrichtung entlang des Stators (15) angeordnet sind.

12. Elektrische Maschine nach dem vorhergehenden Anspruch, **dadurch gekennzeichnet, dass** sich die Kerben (19) axial entlang des Stators (15) erstrecken.

13. Elektrische Maschine nach einem der Ansprüche 10 bis 12, **dadurch gekennzeichnet, dass** der Stator (15) einen Außendurchmesser zwischen 100 und 300 mm und vorzugsweise 200 mm und einen Innendurchmesser zwischen 100 und 200 mm, der vorzugsweise 135 mm beträgt, aufweist.

14. Elektrische Maschine nach einem der Ansprüche 10 bis 13, **dadurch gekennzeichnet, dass** sie einen Luftspalt (18) mit einer Länge zwischen 0,4 mm und 0,8 mm und vorzugsweise 0,6 mm aufweist.

## Claims

1. Rotor (1) for electric machine, the rotor (1) includes:
- a rotor body (1), formed by a stack of sheets (3), placed on a rotor shaft (1),
- at least two magnetic poles, each magnetic pole is composed of three magnets (7) positioned in three axial grooves (6), of which an external axial groove (30) located near the periphery of the rotor (1), an internal axial groove (32) located near the center of the rotor (1) and a central axial notch (31) located radially between the other two notches (30, 32),
- an external flow barrier (9), a central flow barrier (10) and an internal flow barrier (11), each flow barrier (9, 10, 11) comprises two inclined recesses (8) positioned on both sides of the axial recesses (6) and separated from them by magnetic bridges,
**characterized in that** the axial grooves (6) comprise two upper threads (40, 41) whose radius is between 0.3 and 0.6 mm and preferably equal to 0.5 mm and which extend radially above said axial grooves (6), opposite the rotor shaft (1), to allow a reduction of the mechanical stress in the upper part of said axial grooves (6),
the internal axial recess (32) comprises two lower threads (50, 51) each consisting of a first fitting whose radius of curvature R1 is between 0.95 and 1.1 mm and preferably is equal to 1 mm, and a second fitting whose radius of curvature R2 is between 2.51 and 2.53 mm and is preferably 2.52 mm, the two lower threads (50, 51) extend radially below said internal axial recess (32) , towards the rotor shaft (1).

2. Rotor (1) for electric machine according to the preceding claim, **characterized in that** the axial recesses (6) have a substantially trapezoidal shape.

3. Rotor (1) for electric machine according to claim 1, **characterized in that** the axial recesses (6) have a substantially rectangular shape.

4. Rotor (1) for an electric machine according to one of the preceding claims, **characterized in that** the thickness of the magnetic bridges between the two inclined recesses (8) of the external flow barrier (9) and the external axial recess (30) it is comprised between 0.5 mm and 0.6 mm and is preferably 0.55 mm.

5. Rotor (1) for an electric machine according to one of the preceding claims, **characterized in that** the thickness of the magnetic bridges between the two inclined recesses (8) of the central flow barrier (10) and the central axial recess (31) is comprised between 0.6 mm and 0.7 mm and is preferably 0.65 mm.

6. Rotor (1) for an electric machine according to one of the preceding claims, **characterized in that** the thickness of the magnetic bridges between the inclined recesses (8) of the internal flow barrier (11) and the internal axial recess (32) is comprised between 1 mm and 1.1 mm and is preferably 1.05 mm.

7. Rotor (1) for electric machine according to one of the preceding claims, **characterized in that** the two inclined recesses (8) of the internal flow barrier (11) comprise a cavity (60) having a radius of curvature R3 comprised between 2.7 and 2.9 mm and which is preferably 2.8 mm.

8. Rotor (1) for an electric machine according to one of the preceding claims, **characterized in that** the inclined recesses (8) form an opening angle between them (Θ1, Θ2, Θ3) which corresponds to the angle between two straight lines (Δ1, Δ2) each passing through the center C of the rotor (1) and through a midpoint (M) arranged on an external face (12) of the respective recesses (8) of each flow barrier (9, 10, 11), from fact that the rotor (1) comprises four primary magnetic poles (13) each consisting of an external flow barrier (9) comprising an opening angle (Θ1) substantially equal to 43.1°, from a central flow barrier (10 ) comprising an opening angle (Θ2) substantially equal to 33.1° and an internal flow barrier (11) comprising an opening angle (Θ3) substantially equal to 23.1° and four secondary magnetic poles (14) each composed of an external flow barrier (9) comprising an opening angle (Θ1) substantially equal to 34.4°, by a central flow barrier (10) comprising an opening angle (Θ2) substantially equal to 24.4° and by an internal flow barrier (11) comprising an opening angle (Θ3) substantially equal to 14.4° and each secondary pole (14) alternates with a primary pole (13).

9. Rotor (1) for an electric machine according to the previous claim, **characterized in that** the difference between the opening angles (Θ1, Θ2, Θ3) of each flux barrier (9, 10, 11) respectively from a magnetic pole on the other it is equal to 8.7°.

10. Electric machine **characterized in that** it comprises a stator (15) and a rotor (1) according to one of claims 1 to 9, said rotor (1) being housed inside said stator (15).

11. Electric machine according to the preceding claim, **characterized in that** said stator (15) comprises a plurality of radial notches (19) arranged circumferentially along said stator (15).

12. Electric machine according to the preceding claim, **characterized in that** the notches (19) extend axially along the stator (15).

13. Electric machine according to one of claims 10 to 12, **characterized in that** the stator (15) has an external diameter between 100 and 300 mm and is preferably 200 mm and an internal diameter between 100 and 200 mm and which is preferably 135 mm.

14. Electric machine according to one of claims 10 to 13, **characterized in that** it comprises an air gap (18) having a length of between 0.4 mm and 0.8 mm and which is preferably 0.6 mm.
